(19) Europäisches Patentamt
European Patent Office
Office européen des brevets

(11) **EP 4 202 003 A1**

(12) **EUROPÄISCHE PATENTANMELDUNG**

(43) Veröffentlichungstag:
**28.06.2023 Patentblatt 2023/26**

(21) Anmeldenummer: **21216847.0**

(22) Anmeldetag: **22.12.2021**

(51) Internationale Patentklassifikation (IPC):
**C09J 7/00** (2018.01)

(52) Gemeinsame Patentklassifikation (CPC):
**C09J 7/00;** C09J 2301/31

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **INNOCISE GmbH**
**66111 Saarbrücken (DE)**

(72) Erfinder:
• **OLLMANN, Henrik**
**66117 Saarbrücken (DE)**
• **RUNDEL, Fabian**
**66111 Saarbrücken (DE)**

(74) Vertreter: **Patentanwälte Gierlich & Pischitzis Partnerschaft mbB**
**Gerbermühlstraße 11**
**60594 Frankfurt am Main (DE)**

(54) **FORMKÖRPER MIT GESTEUERTER ABLÖSUNG**

(57) Die Erfindung betrifft eine trockenadhäsive Struktur, welche eine besondere Kontrolle der bei der Ablösung wirkenden Kräfte erlaubt.

Dies wird durch einen Formkörper mit einer strukturierten Oberfläche erreicht, welche eine Strukturierung aufweist, die eine Vielzahl von Vorsprüngen umfasst, die mindestens jeweils einen Stamm aufweisen und eine von der Oberfläche wegweisende Stirnfläche, sowie eine Basis umfassen, und auf einer Stützschicht angeordnet sind, wobei bei mindestens einem Vorsprung die Basis und/oder die Stützschicht bezogen auf den Stamm eine Materialalternierung aufweisen, so dass es bei Belastung dieses Vorsprungs zu einer gerichteten Verformung unter Veränderung der Adhäsion kommt.

Fig. 3

**Beschreibung**

Die Erfindung betrifft eine trockenadhäsive Struktur, welche eine besondere Kontrolle der bei der Ablösung wirkenden Kräfte erlaubt.

Trockenadhäsive Strukturen, sogenannte Gecko-Strukturen, ermöglichen eine Adhäsion an Oberflächen durch van-der-Waals-Wechselwirkungen zwischen Oberflächen. Die Adhäsionskraft hängt dabei vor allem von der Kontaktfläche ab. Häufig sind diese Strukturen Vorsprünge mit einer Stirnfläche. Nach Kontakt mit der Stirnfläche an einem Objekt wird eine Adhäsion aufgebaut.

Zum Ablegen des Objektes existieren unterschiedliche Mechanismen. Alle bewirken ein Ablösen der Säulenstirnfläche vom gegriffenen Objekt. Der gängigste Ablösemechanismus in der Mikrohandhabung ist der Eulersche Knickfall (engl. Buckling). Hier werden die Säulen kompressiv bis zum Knicken belastet, wodurch die van-der-Waals-Bindungen zwischen der Säulenoberfläche und dem Objekt gelöst werden und das Objekt abgelegt werden kann.

Die Vorsprünge sind in der Regel senkrecht auf einer Stützschicht angeordnet.

Bei einer Kompression der Vorsprünge verteilt sich die eingeleitete Druckkraft F bei idealer, planparalleler Ausrichtung gleichmäßig auf jeden einzelnen Vorsprung. Bei n Vorsprüngen beträgt die auf jeden Vorsprung wirkende Kompressionskraft F/n. Diese Teilkraft wird durch jede der Vorsprünge in die Stützschicht (Backing-Layer) weitergeleitet.

Bekannt ist, dass bei Verwendung von Strukturen mit hohem Aspektverhältnis, z. B. > 3, zur Ablösung von einem Substrat die sogenannte Euler-Knickung verwendet werden kann. Es ist bekannt, dass die Verringerung der Kontaktfläche durch Knicken von Vorsprüngen unter Druckbelastung herbeigeführt werden kann. Bei ausreichender Druckbelastung führt eine elastische Instabilität zum Abknicken der Vorsprünge. Dies wird auch als Euler-Knickung bezeichnet. Die kritische Kraft zum Knicken einer adhäsiven Mikrostruktur bestehend aus n Vorsprüngen beträgt:

$$F_k \;=\; n\,(\alpha\pi/\mathrm{L})^2 E^* I$$

Dabei ist $E^*$ der reduzierte Elastizitätsmodul des Materials ($E^*=E/(1-\nu^2)$ mit $\nu$ Poissonzahl (ca. 0,5 bei Elastomeren)), $I$ das Flächenträgheitsmoment, L ist die Länge (Höhe) des Vorsprungs und $\alpha$ ist ein Vorfaktor in Abhängigkeit von der mechanischen Einspannung des Vorsprungs. Das Flächenträgheitsmoment bei einer zylindrischen Struktur beträgt $I = \pi d^4/64$. Daraus ergibt sich folgender Zusammenhang: Vorsprünge mit großer Höhe, geringem Durchmesser oder geringem Elastizitätsmodul knicken bei geringeren Kräften als Vorsprünge mit kurzer Länge, großem Durchmesser oder hohem Elastizitätsmodul. Dabei kommt es durch zusätzlichen Druck in Richtung des Objekts zur Verknickung der Struktur und damit zur Verringerung der Kontaktfläche mit der Oberfläche. Dies führt zur Reduktion der Adhäsion.

Die Beschaffenheit der Stützschicht um die Vorsprungseinmündungsstelle herum bestimmt nun maßgeblich das weitere Knickverhalten der Vorsprünge.

An der Einmündung des Vorsprungs in die Stützschicht treten Reaktionskräfte auf, die der eingeleiteten Druckkraft entgegenwirken.

Die Richtung, in welche ein Vorsprung letztendlich knickt, ist nicht vorhersehbar und stark von lokalen, molekularen Materialinhomogenitäten oder einer generellen Schiefstellung zum Objekt (Misalignment) abhängig. Die Knickrichtung des ersten knickenden Vorsprungs bestimmt meist die Knickrichtung der restlichen Vorsprünge, da dieser einen Impuls auf die anderen Vorsprünge überträgt. Hieraus resultiert in der Regel ein gemeinsames Knicken aller Vorsprünge in eine Globalrichtung.

Der Betrag dieser Reaktionskräfte ist abhängig vom Materialvolumen, welches die Säule an der Einmündungsstelle umgibt. Je mehr Material, desto größer der Widerstand, desto höher die Reaktionskräfte bzw. desto größer die Knickstabilität der Säule.

Gleichzeitig kann eine Steuerung der Knickrichtung und der dazu aufzuwendenden Kraft, das Handling von empfindlichen Substraten verbessern. Insbesondere, dass auf das Objekt beim Ablösen möglichst geringe Kräfte wirken.

Aufgabe

Aufgabe der Erfindung ist es, eine Struktur bereitzustellen, welche, insbesondere bei Normalhaftung, eine einfache Ablösung ermöglicht.

Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindungen umfassen auch alle sinnvollen und insbesondere alle erwähnten Kombinationen von unabhängigen und/oder abhängigen Ansprüchen.

Diese Aufgabe wird durch einen Formkörper mit einer strukturierten Oberfläche, welche eine Strukturierung aufweist, die eine Vielzahl von Vorsprüngen umfasst, die mindestens jeweils einen Stamm aufweisen und eine von der Oberfläche wegweisende Stirnfläche, sowie eine Basis umfassen, und auf einer Stützschicht angeordnet sind, gelöst, wobei bei mindestens einem Vorsprung die Basis und/oder die Stützschicht bezogen auf den Stamm eine Materialalternierung aufweisen, so dass es bei Belastung dieses Vorsprungs zu einer gerichteten Verformung unter Veränderung der Adhäsion kommt.

Dabei wird unter einer Basis der Bereich verstanden, welcher am unteren Ende des Stamms bei Einmündung in die Stützschicht angeordnet ist. Die Basis ist bevorzugt ein Bereich gemessen von der Stützschicht aus von bis zu 40 %, bevorzugt bis zu 30 %, insbesondere bevorzugt zu 20 %, bis zur Gesamthöhe des Vorsprungs mit der Stirnfläche.

Unter einer Materialalternierung wird eine Änderung des Materials, wie beispielsweise ein Hinzufügen, Ändern oder Weglassen von Material verstanden.

Die Materialalternierung wird bevorzugt vom Mittelpunkt der Grundfläche eines Vorsprungs aus betrachtet. Die Grundfläche ist dabei der Querschnitt des Vorsprungs auf der Stützfläche. Eine Materialalternierung bedeutet dann, dass ausgehend vom Mittelpunkt der Grundfläche, die zu der Grundfläche senkrechte Verteilung an Material oberhalb der Grundfläche und/oder unterhalb der Grundfläche, d.h. innerhalb der Stützschicht, entlang eines zunehmenden Radius parallel zur Grundfläche unterschiedlich zum Radius in die entgegengesetzte Richtung ist. Bevorzugt wird dabei jeweils ein Halbkreis betrachtet. Dies bedeutet, dass beispielsweise die Basis in die eine Richtung breiter ist, als in die entgegengesetzte Richtung. Bevorzugt wird der maximale Radius dieser Betrachtung dadurch bestimmt, so lange die Menge an Material innerhalb des betrachteten Volumens oberhalb und/oder unterhalb der Grundfläche nicht ansteigt. Diese Betrachtung wird immer nur für einen jeweiligen Vorsprung durchgeführt. Benachbarte Vorsprünge werden nicht betrachtet.

Neben Materialalternierung in der Basis kann auch eine Materialalternierung in der Stützschicht vorliegen. Dies kann beispielsweise eine seitliche Einkerbung, d.h. Wegnahme von Material, oder eine Veränderung der Dicke der Stützschicht oder ein Hohlraum in der Stützschicht sein.

Die Materialalternierung kann auch darin bestehen, dass der jeweilige Vorsprung am Rand der Stützschicht angeordnet ist, so dass in Richtung des Rands weniger Material vorliegt.

Jede Materialalternierung ist bevorzugt auf jeweils einen Vorsprung hin ausgerichtet und wiederholt sich für jeden Vorsprung individuell. Auf die Vielzahl der Vorsprünge betrachtet ist die Materialalternierung bevorzugt sich wiederholend für jeden einzelnen Vorsprung. Dadurch ist gewährleistet, dass die Vorsprünge das gleiche, wenn auch unterschiedlich ausgerichtete, Knickverhalten aufweisen. Im Querschnitt würde dann beispielsweise die senkrechte Dicke der Basis zwischen zwei Vorsprüngen ab und wieder zunehmen. Bei einer Reihe an Vorsprüngen wiederholt sich die Materialanhäufung.

Im Falle einer Materialalternierung in der Stützschicht, ist bevorzugt, dass die Vorsprünge so auf der Stützschicht angeordnet sind, dass sie jeweils am Rand der Stützschicht angeordnet sind. Dazu kann erforderlich sein, dass die Stützschicht auf der Trägerschicht angeordnet ist und jeweils ein oder mehrere Podeste bildet, auf denen jeweils mindestens ein Vorsprung angeordnet ist. Die Stützschicht bildet in diesem Fall eine Vielzahl von Podesten auf der Trägerschicht und keine zusammenhängende Schicht. Dadurch ist es insbesondere möglich, dass das Knickverhalten des Vorsprungs beispielsweise über eine seitliche Kerbe in der Stützschicht und/oder der Anordnung am Rand gesteuert werden kann, während der Vorsprung selbst zusätzlich eine verbreiterte Basis aufweisen kann. Bevorzugt sind je Podest bis zu 10, bevorzugt bis zu 5, insbesondere bis zu 3 Vorsprünge angeordnet. Es ist auch möglich, dass jeder Vorsprung seine eigene Stützschicht auf der Trägerschicht aufweist. Es ist bevorzugt, dass im Falle einer Einkerbung die Vorsprünge auch eine verbreiterte Basis, bevorzugt ebenfalls mit einer Materialalternierung aufweisen. Dies verbessert die Stabilität und das Knickverhalten. Auch kann die Alternierung in der Basis den Effekt der Einkerbung in der Stützschicht verbessern.

Die Materialalternierung wird bevorzugt immer in Richtung der resultierenden Knickrichtung betrachtet. Bevorzugt beträgt der Unterschied in Material betrachtet ein Bezug auf die gegenüberliegenden Bereiche mindestens 5 %, insbesondere mindestens 10 % bezogen auf die Masse an Material. Insbesondere liegt der Unterschied in Material bei bis zu 50 %, bevorzugt bis zu 30 %. Dabei wird die Seite mit weniger Material als 100 % gesehen.

Bevorzugt tritt die Knickung bei der Mehrzahl an Vorsprüngen, bevorzugt bei mindestens 70 %, insbesondere mindestens 80 %, insbesondere mindestens 90 %, ganz besonders allen Vorsprüngen bei der gleichen minimalen Kraft auf.

Bevorzugt tritt die Knickung bei der gleichen Belastung ein.

Bevorzugt wird je ein Halbkreis um den Mittelpunkt eines Vorsprungs betrachtet. Dies bedeutet, dass bei einem solchen Vorsprung die eine Hälfte, insbesondere in Basis und/oder Stützschicht, eine andere Materialverteilung in Stützschicht und/oder Basis aufweist, als die andere Hälfte. Dadurch kommt es bei Belastung zu einer unterschiedlichen Einwirkung und dadurch zu einer unterschiedlichen Knickung des Vorsprungs. Durch die Verwendung mehrerer Vorsprünge mit jeweils anders ausgerichteter Materialalternierung kann so die Knickung der Vorsprünge aufeinander abgestimmt werden.

Insbesondere durch Alternierung des Materials in der Basis kann erreicht werden, dass diese Strukturen einfach durch Abformung hergestellt werden können.

Gleichzeitig bleiben der Stamm und die Stirnfläche unverändert im Vergleich zu einer nicht angepassten Struktur. Dadurch bleiben die maximalen Adhäsionskräfte erhalten und die Adhäsion wird nicht negativ beeinflusst.

Die Belastung des Vorsprungs ist bevorzugt eine Belastung des Vorsprungs in Normalrichtung bezogen auf die Stirnfläche des Vorsprungs. Bevorzugt handelt es sich um eine Kompression des Vorsprungs entlang seines Stammes.

Es ist bekannt, dass es bei ausreichender Belastung eines Vorsprungs zur Knickung von Vorsprüngen kommt, welche zu einer Veränderung der Kontaktfläche, d.h. der Adhäsion führt. Die Vorrichtung lässt sich so reversibel zwischen einem adhäsiven Zustand und einem schwach-adhäsiven Zustand schalten. Die aufzuwendende Kraft hängt unter anderem vom effektiven komplexen Modul des Vorsprungs ab.

Dabei kommt es bei Belastung zu einer unkontrollierten Verformung der Vorsprünge, deren Richtung und Ausmaß nur schwer steuerbar ist. Dies führt auch dazu, dass es zu einer lateralen Verschiebung kommen kann oder das gehaltene Objekt in einen instabilen Zustand gerät und beispielsweise abrutscht.

Überraschenderweise wurde nun gefunden, dass durch Modifikation der Basis und/oder der Stützschicht die Verformung eines Vorsprungs vorhersagbar gesteuert werden kann.

Bevorzugt ist der Elastizitätsmodul der Vorsprünge konstant, kann aber auch einen axialen oder lateralen Gradienten aufweisen.

Unter der senkrechten Höhe der Stirnfläche wird der Abstand der Stirnfläche zu der Oberfläche verstanden, auf der die Vorsprünge angeordnet sind.

In einer bevorzugten Ausführungsform der Erfindung sind die Vorsprünge der strukturierten Oberfläche der Erfindung säulenartig ausgebildet. Dies bedeutet, dass es sich um bevorzugt senkrecht zur Oberfläche ausgebildete Vorsprünge handelt, welche einen Stamm und eine Stirnfläche aufweisen, wobei der Stamm und die Stirnfläche einen beliebigen Querschnitt aufweisen können (beispielsweise kreisförmig, oval, rechteckig, quadratisch, rautenförmig, sechseckig, fünfeckig, etc.).

Bevorzugt sind die Vorsprünge so ausgebildet, dass die senkrechte Projektion der Stirnfläche auf die Grundfläche des Vorsprungs mit der Grundfläche eine Überlappungsfläche bildet, wobei die Überlappungsfläche und die Projektion der Überlappungsfläche auf die Stirnfläche einen Körper aufspannt, welcher vollständig innerhalb des Vorsprungs liegt. In einer bevorzugten Ausführungsform der Erfindung umfasst die Überlappungsfläche mindestens 50 % der Grundfläche, bevorzugt mindestens 70 % der Grundfläche, besonders bevorzugt umfasst die Überlappungsfläche die gesamte Grundfläche. Die Vorsprünge sind daher bevorzugt nicht geneigt, können es aber sein. Die Vorsprünge sind bevorzugt senkrecht angeordnet.

Bevorzugt ist die Grundfläche größer als die Stirnfläche, d.h. die Vorsprünge weisen eine verbreiterte Basis auf. Dies ist insbesondere bezogen auf den Stamm des Vorsprungs.

In einer bevorzugten Ausführungsform wird die Materialalternierung durch unterschiedliche Verbreiterung der Basis in Richtung der Stützschicht erreicht. Dies kann eine lineare oder ansteigende Verbreiterung sein. Bevorzugt weist die Basis dadurch in der Aufsicht im Querschnitt mindestens eine Symmetrieebene weniger auf, als der Stamm.

In einer bevorzugten Ausführungsform ist die Stirnfläche parallel zur Grundfläche und zur Oberfläche ausgerichtet. Falls die Stirnflächen nicht parallel zur Oberfläche ausgerichtet sind und daher verschiedene senkrechte Höhen aufweisen, wird als senkrechte Höhe des Vorsprungs die mittlere senkrechte Höhe der Stirnfläche angesehen.

In einer bevorzugten Ausführungsform der Erfindung weist der Stamm des Vorsprungs bezogen auf seinen mittleren Durchmesser ein Aspektverhältnis von Höhe zu Durchmesser von 2 bis 15, bevorzugt von 2 bis 10, besonders bevorzugt zwischen 3 und 5 auf.

Dabei wird bevorzugt die Basis nicht für den Durchmesser mitgerechnet.

Unter dem mittleren Durchmesser wird dabei der Durchmesser des Kreises verstanden, der die gleiche Fläche wie der entsprechende Querschnitt des Vorsprungs aufweist, gemittelt über die gesamte Höhe des Vorsprungs.

In einer weiteren Ausführungsform der Erfindung liegt das Verhältnis der senkrechten Höhe eines Vorsprungs zum Durchmesser bei einer bestimmten Höhe über die gesamte Höhe des Vorsprungs immer bei 2 bis 15, bevorzugt bei 2 bis 10, besonders bevorzugt zwischen 3 und 5. Bevorzugt gilt dies auch für den minimalen Durchmesser der Vorsprünge. Dies ist dann relevant, wenn die Vorsprünge beispielsweise bei ovaler Grundfläche einen minimalen und einen maximalen Durchmesser aufweisen.

Die Vorsprünge können verbreiterte Stirnflächen aufweisen, sogenannte "mushroom"-Strukturen. Die verbreiterte Stirnfläche kann sowohl symmetrisch als auch asymmetrisch sein und sowohl symmetrisch als auch asymmetrisch auf dem Stamm angeordnet sein. Dadurch kann der Beginn der Ablösung der Struktur begünstigt werden, beispielsweise wenn die Verbreiterung bevorzugt nach einer Seite hin ausgerichtet ist.

Die Stirnflächen der Vorsprünge können selbst strukturiert sein, um ihre Oberfläche zu erhöhen. In diesem Fall wird als senkrechte Höhe der Vorsprünge die mittlere senkrechte Höhe der Stirnfläche angesehen.

In einer bevorzugten Ausführungsform liegt die senkrechte Höhe aller Vorsprünge in einem Bereich von 1 μm bis 10 mm, bevorzugt 1 μm bis 5 mm, insbesondere 1 μm bis 2 mm, bevorzugt in einem Bereich von 1 μm bis 1 mm.

Dabei wird der Durchmesser entsprechend dem Aspektverhältnis gewählt.

In einer weiteren bevorzugten Ausführungsform liegt die senkrechte Höhe aller Vorsprünge in einem Bereich von 10 $\mu$m bis 1 mm, bevorzugt 10 $\mu$m bis 800 $\mu$m, besonders bevorzugt 50 $\mu$m bis 600 $\mu$m, ganz besonders bevorzugt 100 $\mu$m bis 500 $\mu$m. Dabei wird der Durchmesser entsprechend dem Aspektverhältnis gewählt.

In einer bevorzugten Ausführungsform entspricht die Grundfläche eines Vorsprungs von der Fläche her einem Kreis mit einem Durchmesser zwischen 1 $\mu$m bis 10 mm, bevorzugt 1 $\mu$m und 500 $\mu$m, insbesondere bevorzugt zwischen 1 $\mu$m und 100 $\mu$m, besonders bevorzugt zwischen 1 $\mu$m und 60 $\mu$m. In einer Ausführungsform ist die Grundfläche eines Vorsprungs ein Kreis mit einem Durchmesser zwischen 1 $\mu$m und 500 $\mu$m, bevorzugt 10 $\mu$m und 200 $\mu$m.

Der mittlere Durchmesser der Stämme liegt bevorzugt zwischen 1 $\mu$m bis 10 mm, bevorzugt 1 $\mu$m und 500 $\mu$m, insbesondere bevorzugt zwischen 1 $\mu$m und 100 $\mu$m, bevorzugt 10 $\mu$m bis 60 $\mu$m. Bevorzugt ist die Höhe und der mittlere Durchmesser entsprechend dem bevorzugten Aspektverhältnis angepasst.

In einer bevorzugten Ausführungsform ist bei verbreiterten Stirnflächen die Oberfläche der Stirnfläche eines Vorsprungs mindestens 1,01 mal, bevorzugt mindestens 1,4 mal so groß wie die Fläche der Grundfläche eines Vorsprungs. Sie kann beispielsweise um den Faktor 1,01 bis 2 größer sein.

In einer weiteren Ausführungsform ist die Stirnfläche zwischen 5% und 100% größer als die Grundfläche des Vorsprungs, besonders bevorzugt zwischen 5% und 20% der Grundfläche des Vorsprungs.

In einer bevorzugten Ausführungsform beträgt der Abstand zwischen zwei Vorsprüngen weniger als 2 mm, insbesondere weniger als 1 mm. Bevorzugt ist ein Abstand von unter 500 $\mu$m, insbesondere von 10 $\mu$m bis 400 $\mu$m. Dabei bezeichnet der Abstand die minimale Strecke von dem Rand des Stamms bei 50 % der senkrechten Höhe zum Rand des nächsten Vorsprungs.

Durch die Materialalternierung kann die Knickung des jeweiligen Vorsprungs gesteuert werden. Dadurch kann die Verformung zu einer bestimmten Seite hin oder weg gesteuert werden. Dadurch können kleinere Ungenauigkeiten bei der Ausrichtung des Formkörpers zur Oberfläche nicht zu einer Veränderung des Ablöseverhalten führen.

Die Verwendung von Materialalternierung in Basis und Stützschicht ermöglicht es, die adhäsiven Eigenschaften des Formkörpers auf einfache Weise anzupassen und zu verändern. Sie können insbesondere genau auf eine bestimmte Anwendung zugeschnitten werden. Da das Material nicht verändert werden muss, können mit einer Fertigungstechnik viele verschiedene Varianten hergestellt werden.

Der Elastizitätsmodul des Vorsprungs beträgt bevorzugt 50 kPa bis 1 GPa, bevorzugt 500 kPa bis 20 MPa, besonders bevorzugt 1 MPa bis 10 MPa. Der Elastizitätsmodul eines Vorsprungs ist bevorzugt konstant. Ein Vorsprung kann aber auch unterschiedliche Materialien mit unterschiedlichem Elastizitätsmodul umfassen. So ist es beispielsweise möglich den Bereich umfassend die Stirnfläche aus einem besonders weichen Material zu bilden.

Die Elastizität der Vorsprünge kann auch über die Härte des verwendeten Materials, bevorzugt ein Elastomer, definiert werden. Bevorzugt ist eine Härte von Shore-A 20 bis Shore-A 100, bevorzugt Shore-A 40 bis Shore-A 80, für das Material der Vorsprünge.

Die Vorsprünge können aus vielen unterschiedlichen Materialien bestehen, bevorzugt sind Elastomere. Für höhere Elastizitätsmodule können auch Duroplaste verwendet werden.

Die Vorsprünge können daher folgende Materialien umfassen:

epoxy- und/oder silikonbasierte Elastomere, thermoplastische Elastomere (TPE), Polyurethane, Epoxidharze, Acrylatsysteme, Methacrylatsysteme, Polyacrylate als Homo- und Copolymere, Polymethacrylate als Homo- und Copolymere (PMMA, AMMA Acrylnitril/Methylmethacrylat), Polyurethan(meth)acrylate, Silikone, Silikonharze, Kautschuk, wie R-Kautschuk (NR Naturkautschuk, IR Poly-Isopren-Kautschuk, BR Butadienkautschuk, SBR Styrol-Butadien-Kautschuk, CR Chloropropen-Kautschuk, NBR Nitril-Kautschuk), M-Kautschuk (EPM Ethen-Propen-Kautschuk, EPDM Ethylen-Propylen-Kautschuk), ungesättigte Polyesterharze, Formaldehydharze, Vinylesterharze, Polyethylene als Homo- oder Copolymere, sowie Mischungen und Copolymere der vorgenannten Materialien. Bevorzugt sind auch Elastomere, welche zur Verwendung im Bereich Verpackung, Pharma und Lebensmittel von der EU (gemäß EU-VO Nr. 10/2011 vom 14.01.2011, veröffentlicht am 15.01.2011) oder FDA zugelassen sind oder silikonfreie UV-härtbare Harze aus der PVD und CVD-Verfahrenstechnik. Dabei steht Polyurethan(meth)acrylate für Polyurethanmethacrylate, Polyurethanacrylate, sowie Mischungen und/oder Copolymere davon.

Bevorzugt sind epoxy- und/oder silikonbasierte Elastomere, Polyurethan(meth)acrylate, Polyurethane, Silikone, Silikonharze (wie UV-härtbares PDMS), Polyurethan(meth)acrylate oder Kautschuk (wie EPM, EPDM).

Bevorzugt sind die Vorsprünge massiv ausgeführt.

Der Formkörper umfasst eine Vielzahl von Vorsprüngen. Bevorzugt sind sie regelmäßig angeordnet. Bevorzugt weisen mindestens die Vorsprünge am Rand des Formkörpers eine Materialalternierung auf. Im Fall einer Materialalternierung in der Basis ist bevorzugt, dass mindestens 50 %, bevorzugt mindestens 80 %, der Vorsprünge, insbesondere alle Vorsprünge eine Materialalternierung aufweisen. Bevorzugt ist diese so ausgeführt, dass die Vorsprünge eine entsprechend ausgerichtete Knickung aufweisen.

In einer bevorzugten Ausführungsform ist die Stützschicht auf einer Trägerschicht angeordnet. Besonders bevorzugt ist die Stützschicht in ihrer lateralen Ausdehnung kleiner als die Trägerschicht, so dass die Stützschicht einen Rand aufweist.

In einer Ausführungsform der Erfindung ist die Stützschicht zwischen 1 μm und 500 μm, bevorzugt 1 μm bis 100 μm dick.

Abhängig von der erforderlichen Kontaktfläche weist der Formkörper 1 bis 1000000 Vorsprünge auf, bevorzugt 1 bis 1000 Vorsprünge, insbesondere 1 bis 100 Vorsprünge oder 1 bis 6 Vorsprünge, insbesondere 3 bis 50 Vorsprünge auf, insbesondere 3 bis 20 Vorsprünge. Es ist auch möglich, dass mehrere Formkörper mit Gruppen von Vorsprüngen zu einer gemeinsamen Adhäsionsvorrichtung kombiniert werden.

Die Vorsprünge mit oder ohne erfindungsgemäße Modifikation können in unterschiedlicher Weise auf der Stützschicht angeordnet sein. In einer bevorzugten Ausführungsform sind die Vorsprünge konzentrisch um ein Zentrum herum angeordnet. Die Vorsprünge können aber auch linear, rechteckig oder hexagonal angeordnet sein. Die Richtung der Knickung kann durch die erfindungsgemäße Modifikation der Anordnung der Vorsprünge angepasst werden.

In einer bevorzugten Ausführungsform sind die erfindungsgemäßen Vorsprünge so angeordnet, dass die Verformung in mindestens einer Richtung zu keiner lateralen Verschiebung führt. Dies kann dadurch erreicht werden, dass sich die relativen Verformungen der Vorsprünge in diese Richtung gegeneinander aufheben. Dies kann beispielsweise dadurch erreicht werden, dass die Richtung der Materialalternierung an den einzelnen Vorsprüngen so angeordnet ist, dass die lateralen Kräfte durch die Verformung der Vorsprünge sich gegenseitig aufheben. Dies kann beispielsweise dadurch erreicht werden, dass die Verformungsrichtung, d.h. die Richtungen des Knickens der Vorsprünge, auf einen Punkt, eine gemeinsame Symmetrieebene oder Drehachse hin oder weg zeigen. Dies kann beispielsweise dadurch erreicht werden, dass die Vorsprünge konzentrisch angeordnet sind und die Knickrichtung jeweils radial zu diesem Kreis ist. Die Materialalternierung ist dann so angeordnet, dass die Verformung zum Knicken nach außen führt, oder zu einem Knicken der Vorsprünge nach innen, bevorzugt zu einem Knicken nach außen. Eine solche Richtung wird insbesondere dadurch erreicht, dass bei den einzelnen Vorsprüngen die Materialalternierung so ist, dass zum Rand hin Material entfernt und/oder zum Zentrum hin Material hinzugefügt wird.

Die Erfindung betrifft außerdem ein Verfahren zur reversiblen Adhäsion eines erfindungsgemäßen Formkörpers an einer Oberfläche.

Es ist auch möglich, dass mehrere der erfindungsgemäßen Formkörper parallel verwendet werden, um ein Objekt oder mehrere Objekte zu greifen.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Dazu werden Stirnflächen der Vorsprünge des erfindungsgemäßen Formkörpers mit der Oberfläche kontaktiert, so dass sich eine adhäsive Bindung zwischen Formkörper und Oberfläche ausbildet.

Zur Ablösung des Formkörpers wird der Formkörper in Richtung der Oberfläche belastet (Normalbelastung).

Durch diese Bewegung kommt es zu einer Verformung der Vorsprünge, was zur mindestens teilweisen Ablösung der Stirnflächen führt. Dies reduziert die zur Adhäsion beitragende Kontaktfläche und verringert die Haftkraft bis hin zur vollständigen Ablösung.

Gerade bei sehr kleinen und empfindlichen Bauteilen, wie Mikrochips, integrierte Schaltkreise, Displays oder Touchscreens, bietet der erfindungsgemäße Formkörper Möglichkeiten zur selektiven Adhäsion und Ablösung ohne große Belastung des Objekts. Auch sind mit diesem Verfahren Objekte adressierbar, welche über eine herkömmliche Saugvorrichtung nicht ohne weitere Maßnahmen aufgenommen werden können.

Die erfindungsgemäßen Strukturen können bevorzugt zur Abformung hergestellt werden. Bevorzugt wird eine erste Masterstruktur erstellt, beispielsweise durch 2-Photonen-Lithographie. Von dieser Struktur wird eine Negativform hergestellt, beispielsweise aus Silikon. Diese Negativform dient dann als Form für die erfindungsgemäße Struktur aus einem Elastomer, bevorzugt Polyurethan oder Silikon.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt. So umfassen beispielsweise Bereichsangaben stets alle - nicht genannten - Zwischenwerte und alle denkbaren Teilintervalle.

Die Ausführungsbeispiele sind in den Figuren dargestellt. Alle Maßangaben sind in mm. Gleiche Bezugszeichen stehen dabei für die gleichen Elemente. Im Einzelnen zeigt:

Fig. 1     Schematische Darstellung einer Referenzstruktur mit symmetrischer Basis (3C40.40-K120-F1);

Fig. 2     a) Querschnitt durch die Referenzstruktur von Fig. 1;

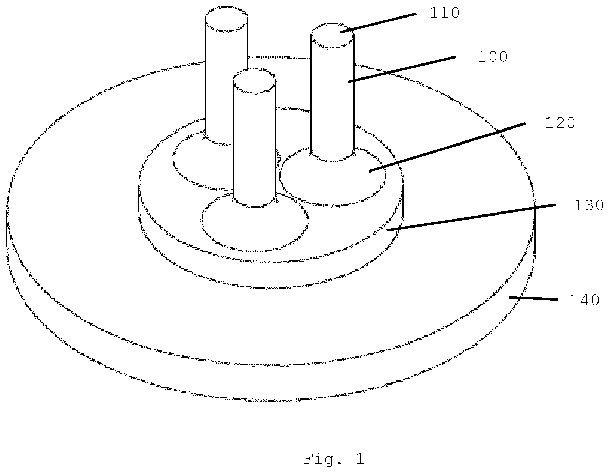

           b) Aufsicht der Struktur von Fig. 1;

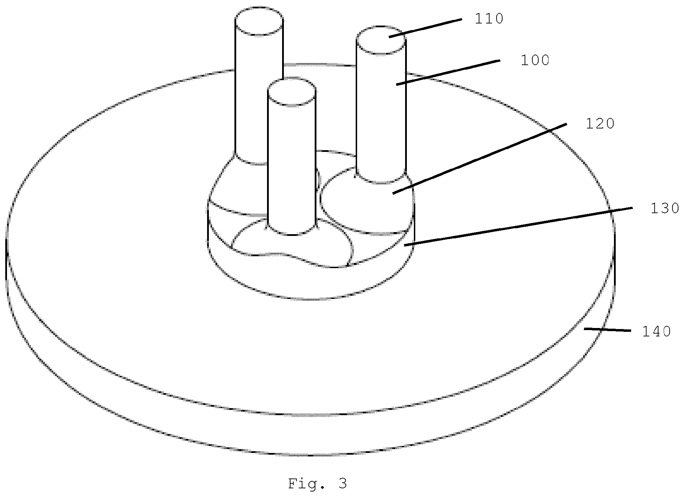

Fig. 3     Schematische Darstellung einer Ausführungsform der Erfindung, bei der die Vorsprünge am Rand der Stützschicht angeordnet sind (3C40.40-K120-F-BLA1);

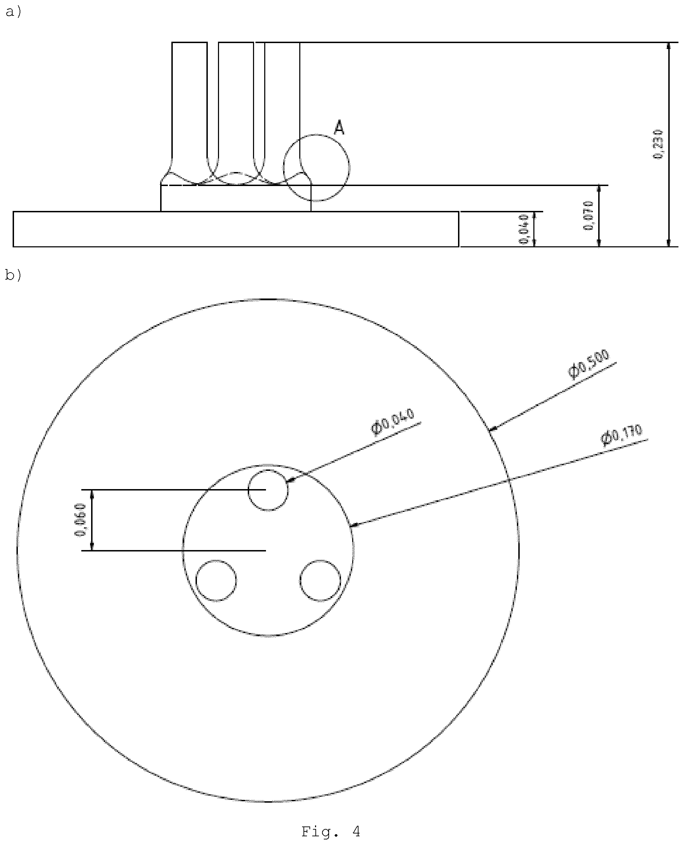

Fig. 4    a) Querschnitt durch die Referenzstruktur von Fig. 3;
          b) Aufsicht der Struktur von Fig. 3;

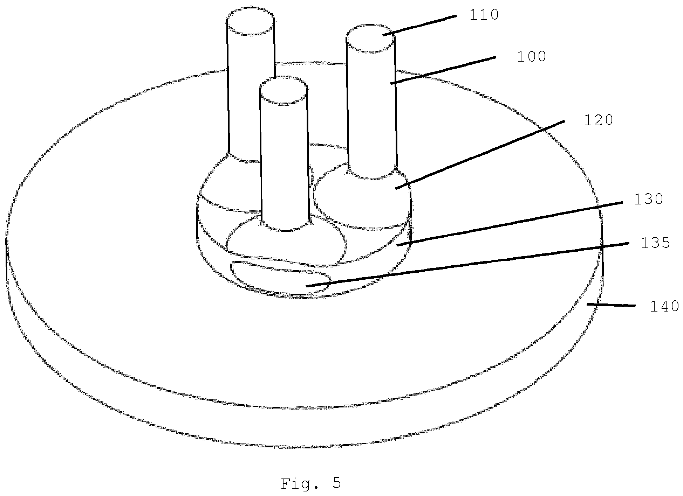

Fig. 5    Schematische Darstellung einer Ausführungsform der Erfindung, bei der die Vorsprünge am Rand der Stützschicht angeordnet sind, und die Stützschicht eine seitliche Einkerbung aufweist (3C40.40-K120-F-BLB1);

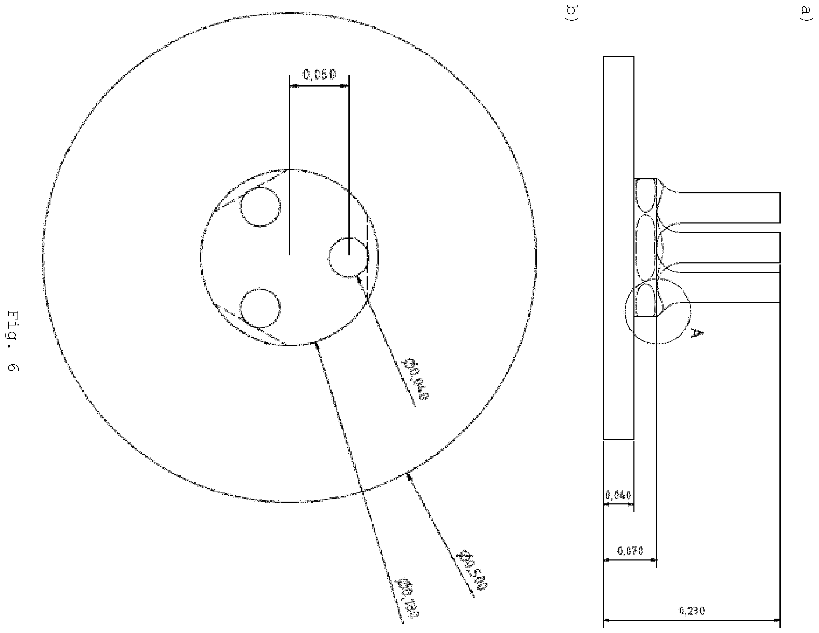

Fig. 6    a) Querschnitt durch die Referenzstruktur von Fig. 5;
          b) Aufsicht der Struktur von Fig. 5;

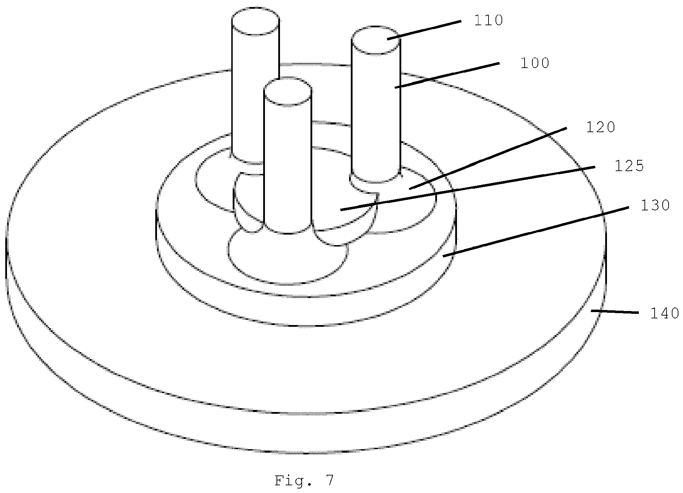

Fig. 7    Schematische Darstellung einer Ausführungsform der Erfindung, bei der im Zentrum der Stützschicht ein
          Materialpodest angeordnet ist (3C40.40-K120-F-BLC1);

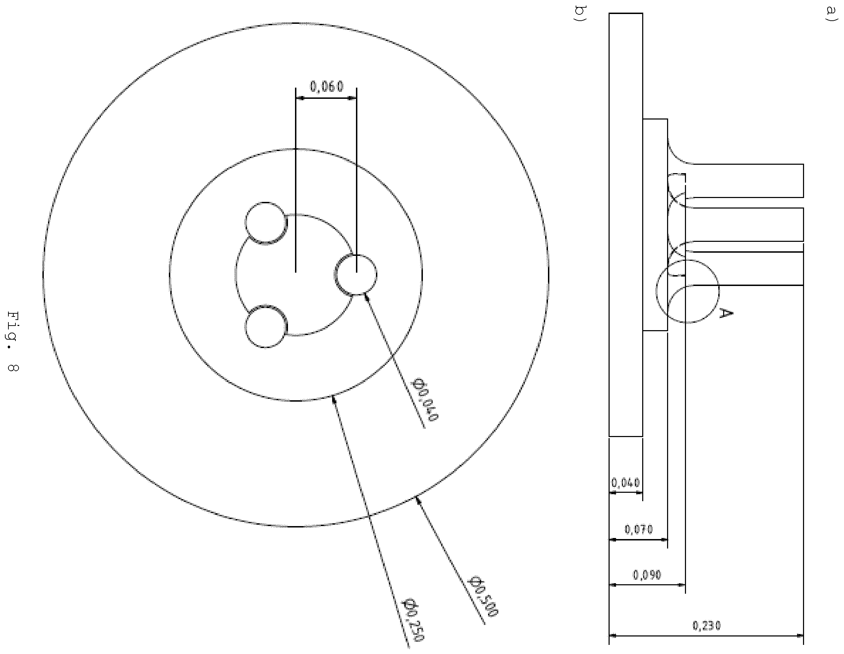

Fig. 8    a) Querschnitt durch die Referenzstruktur von Fig. 7;
          b) Aufsicht der Struktur von Fig. 7;

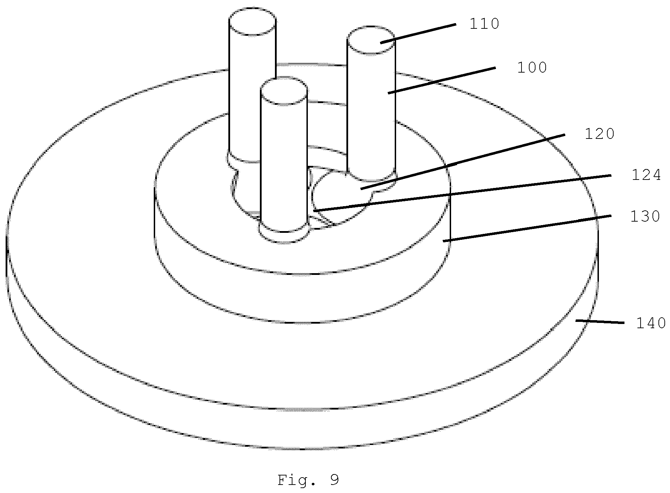

Fig. 9    Schematische Darstellung einer Ausführungsform der Erfindung, bei der im Zentrum der Stützschicht eine
          Vertiefung angeordnet ist (3C40.40-K120-F-BLD1);

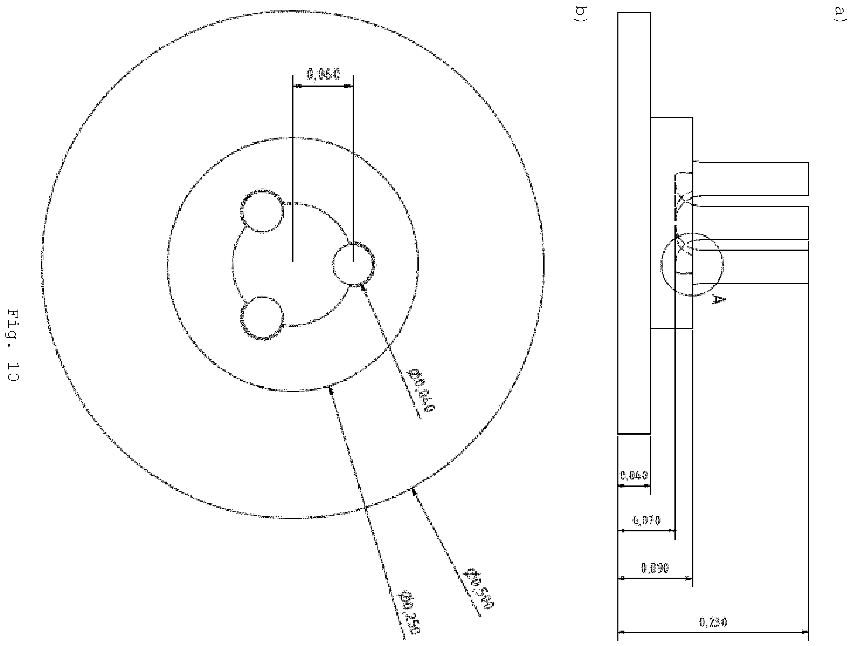

Fig. 10   a) Querschnitt durch die Referenzstruktur von Fig. 9;
          b) Aufsicht der Struktur von Fig. 9;

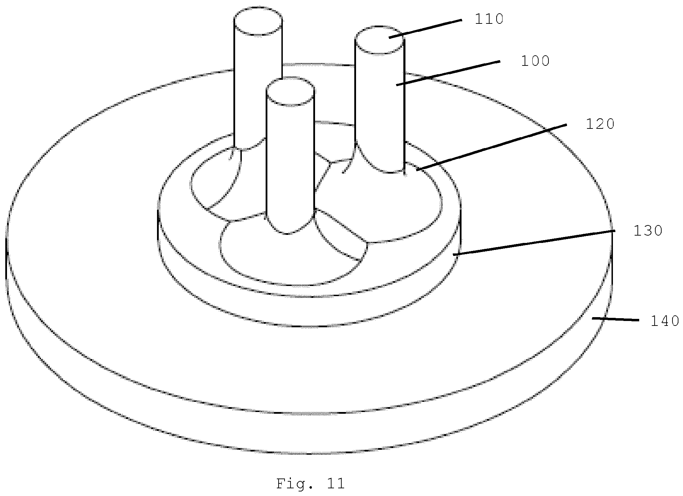

Fig. 11   Schematische Darstellung einer Ausführungsform der Erfindung, bei der die verbreiterte Basis zum Zentrum
          hin relativ weniger abnimmt, als zum Rand der Stützschicht hin (3C40.40-K120-F3);

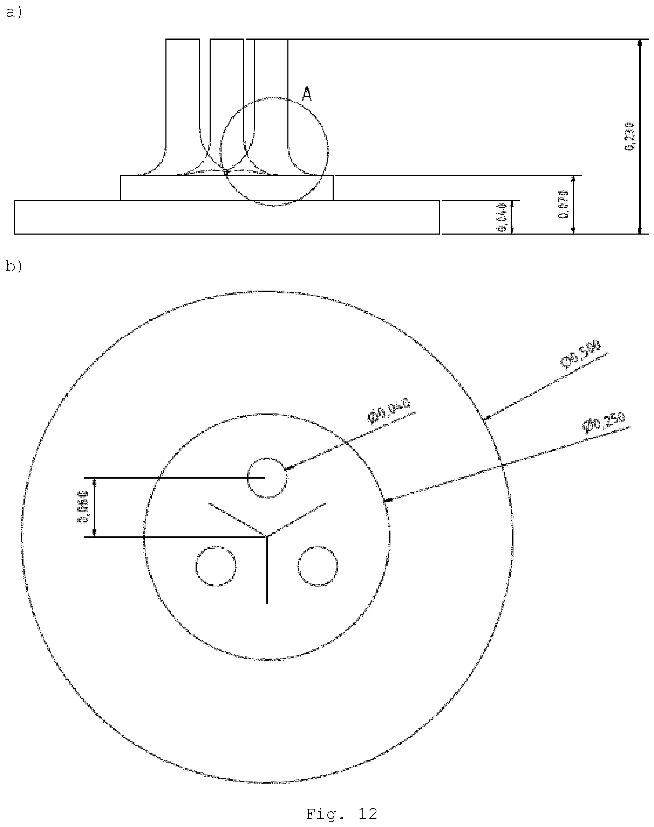

Fig. 12   a) Querschnitt durch die Referenzstruktur von Fig. 11;
          b) Aufsicht der Struktur von Fig. 11;

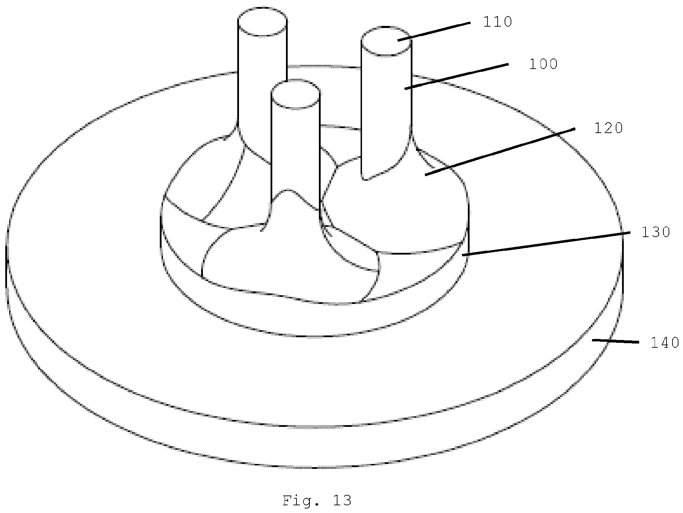

Fig. 13   Schematische Darstellung einer Ausführungsform der Erfindung, bei der die verbreiterte Basis zum Zentrum
          hin stärker abnimmt, als zum Rand der Stützschicht hin (3C40.40-K120-F2);

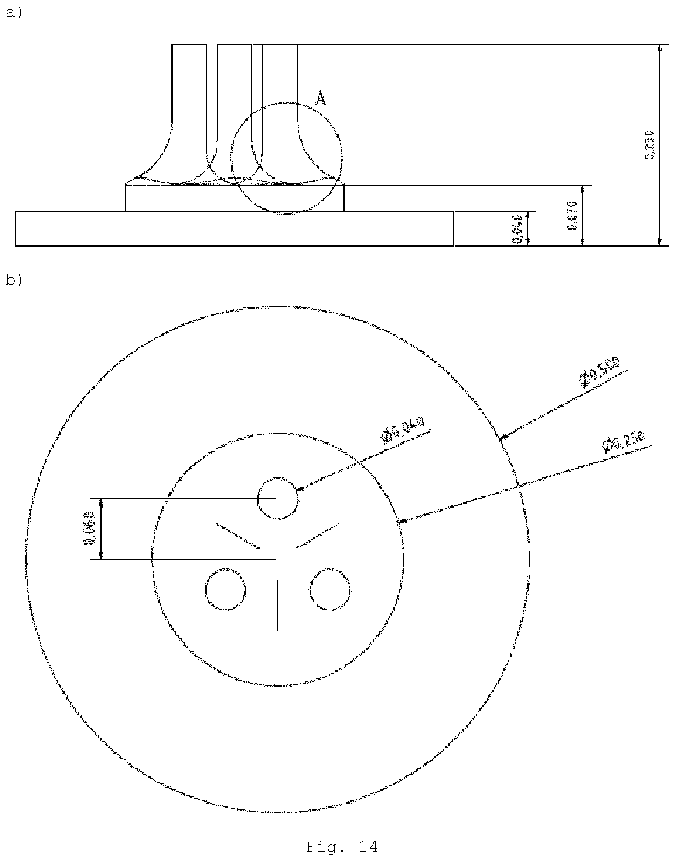

Fig. 14   a) Querschnitt durch die Referenzstruktur von Fig. 13;
          b) Aufsicht der Struktur von Fig. 13;

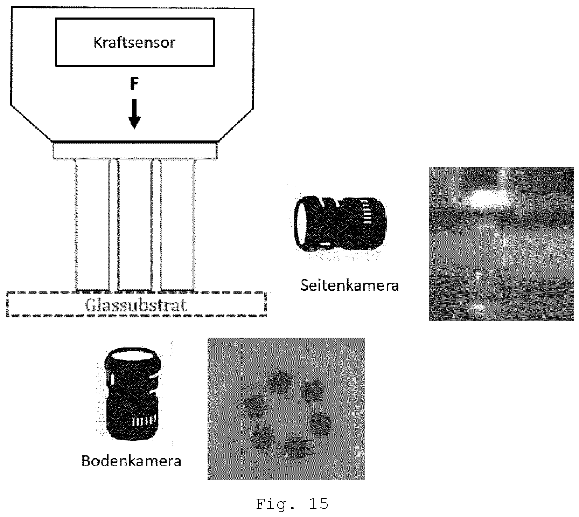

Fig. 15   Schematische Darstellung der Messapparatur;

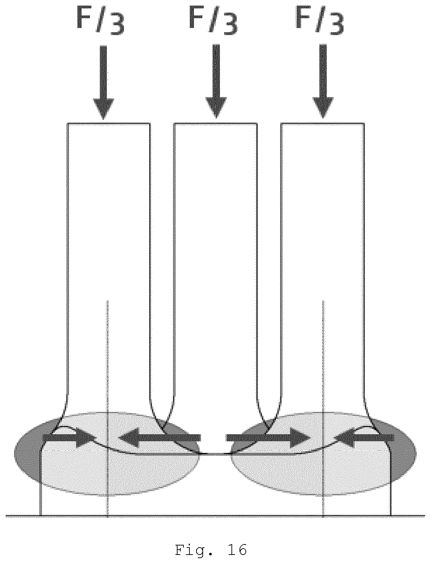

Fig. 16   Schematische Darstellung von Materialalternierung;

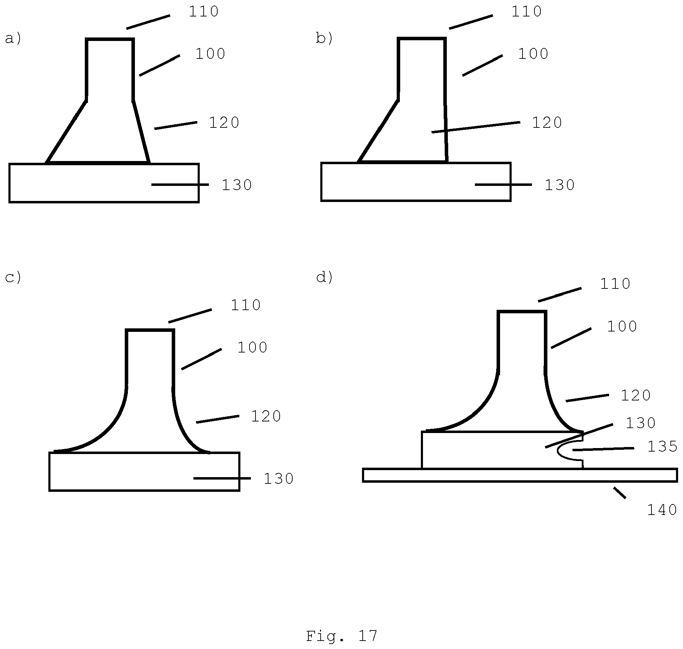

Fig. 17   Schematische Darstellung unterschiedlicher Querschnitte mit Materialalternierung;

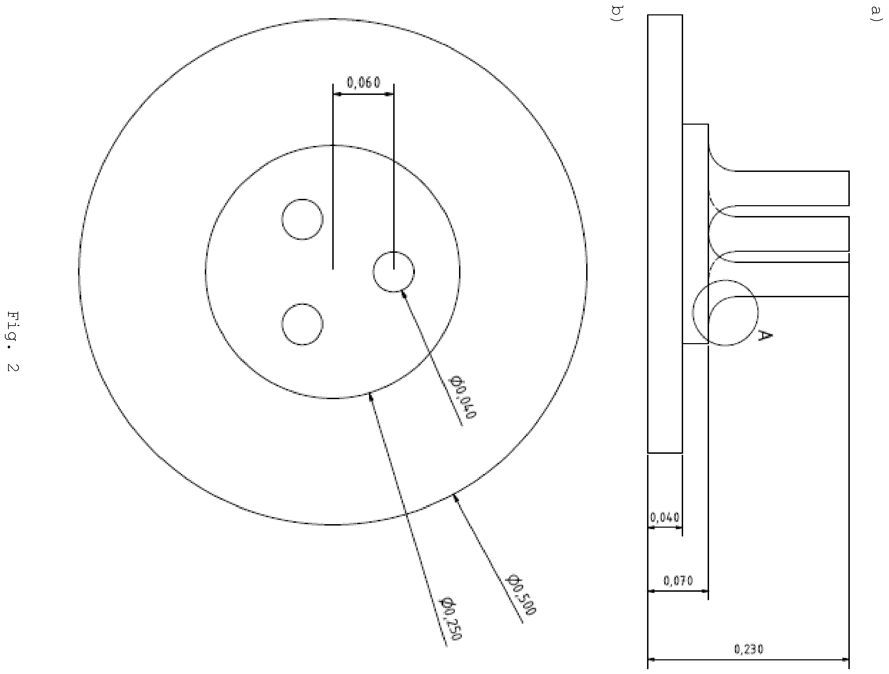

Fig. 1 und Fig. 2 zeigen die schematische Darstellung einer Referenzstruktur mit symmetrischer Basis. Wie in Fig. 1 und Fig. 2 gezeigt, weisen die Vorsprünge eine verbreiterte Basis auf, wobei die Vorsprünge nicht an einem Rand angeordnet sind. Durch die symmetrische Ausprägung ist die Beugung der Vorsprünge nicht gerichtet.

Bei der Struktur sind Vorsprünge 100 mit einer Stirnfläche 110 auf einer Stützschicht 130 angeordnet. Die Stützschicht 130 selbst ist auf einer Trägerschicht 140 angeordnet. Die Vorsprünge weisen eine verbreiterte Basis 120 auf. Dies bedeutet, dass die Vorsprünge 100 im unteren Viertel verbreitert sind. In der Referenzstruktur ist die Basis symmetrisch zum jeweiligen Vorsprung. Dies bedeutet, dass bezogen auf das Material des Vorsprungs zu keiner Seite des Vorsprungs mehr Material vorhanden ist.

Fig. 3 und Fig. 4 zeigen eine Ausführungsform der Erfindung, in welcher die Vorsprünge 100 so am Rand der Stützschicht 130 angeordnet sind, dass die verbreiterte Basis 120 am Rand der Stützschicht 130 endet. Dadurch weisen die Säulen eine unsymmetrische Basis auf. Bei Belastung ist die Beugung der Vorsprünge gerichtet.

Fig. 16 zeigt eine Schnittansicht zur Veranschaulichung der asymmetrischen Materialverteilung. Legt man einen Schnitt durch die Säulen (Vorsprünge) und zieht eine Trennlinie entlang der Säulen-Mittelachse (von Fig. 3), so wird deutlich, dass sich im Zentrum der Stützschicht an den Säuleninnenseiten (innere Flächen) mehr Material befindet als an den Außenseiten (äußere Flächen). Die in der Stützschicht auftretenden Reaktionskräfte sind somit an der Säuleninnenseite stärker ausgeprägt als an der Außenseite, da an der Innenseite mehr Material Widerstand gegen die extern eingeleitete Kompressionskraft ausübt.

Die extern eingeleitete Druckkraft hat daher an der Säulenaußenseite weniger Widerstandskräfte und bewirkt hier ein größeres lokales Einsinken der Säule in die elastische Stützschicht. Dies muss ein Nachrücken von Material an der Säulenaußenseite in Richtung der Stützschicht zur Folge haben, was schließlich in einer Stützschicht-nahen Säulenkontur resultiert, die ein Knicken der Säulen nach außen favorisiert.

Fig. 5 und Fig. 6 zeigen eine Ausführungsform der Erfindung, in welcher die Vorsprünge 100 so am Rand der Stützschicht 130 angeordnet sind, dass die verbreiterte Basis 120 am Rand der Stützschicht endet. Dadurch weisen die Säulen eine unsymmetrische Basis auf. Zusätzlich weist die Stützschicht 130 unterhalb der Säulen eine Einkerbung 135 auf. Bei Belastung ist die Beugung der Vorsprünge gerichtet. Die Einkerbung 135 unterstützt die gerichtete Beugung der Vorsprünge und verstärkt die asymmetrische Materialverteilung.

Fig. 7 und Fig. 8 zeigen eine Ausführungsform der Erfindung, bei welcher im Vergleich zur Referenzstruktur ein Materialpodest 125 im Zentrum der Stützschicht 130 platziert wurde, welches die Vorsprünge 100 verbindet. Dadurch weisen die Vorsprünge eine asymmetrische Materialverteilung auf. Ein solches Podest führt zu einer Beugung nach außen.

Fig. 9 und Fig. 10 zeigen eine Ausführungsform der Erfindung, bei welcher im Vergleich zur Referenzstruktur eine Vertiefung 124 im Zentrum der Stützschicht platziert wurde, welche die Vorsprünge verbindet. Dadurch weisen die Vorsprünge eine asymmetrische Materialverteilung auf. Eine solche Vertiefung führt zu einer Beugung nach innen. In dieser Ausführungsform sind die Vorsprünge relativ zur Referenzstruktur teilweise in die Stützschicht versenkt worden.

Fig. 11 und Fig. 12 zeigen eine Ausführungsform der Erfindung, mit unsymmetrischer Materialverteilung der verbreiterten Basis. Der Durchmesser der Stützschicht 130 ist im Vergleich zur Referenzstruktur nicht verändert. Allerdings weisen die verbreiterten Basen 120 einen über den Umfang des Grundkreises graduell ändernden Radius auf. Von der kreisförmigen Säulenmitte aus gesehen, nimmt der Radius nach unten zu, allerdings nicht in gleichem Maße zum Zentrum der Struktur wie zur Außenseite hin. So wurde ein höherer Innenradius zum Zentrum der Struktur hin verwendet, als die Basis an der Außenseite. Die Basen der Vorsprünge überlappen dadurch im Zentrum der Struktur und zwischen den Basen. Dadurch kommt es innerhalb der Vorsprünge zu einer Materialanhäufung.

Fig. 13 und Fig. 14 zeigen eine Ausführungsform der Erfindung, mit unsymmetrischer Materialverteilung der verbreiterten Basis. Der Durchmesser der Stützschicht 130 ist im Vergleich zur Referenzstruktur nicht verändert. Allerdings weisen die verbreiterten Basen 120 analog zu den Figuren 11 und 12 zwei unterschiedliche Radien auf. So wurde ein geringerer Innenradius zum Zentrum der Struktur hin verwendet, als die Basis an der Außenseite. Die Basen der Vorsprünge nehmen dadurch zum Zentrum hin stärker ab, als zum Rand der Stützschicht hin. Dadurch kommt es außerhalb der Vorsprünge zu einer Materialanhäufung.

Figur 15 zeigt einen schematischen Aufbau der Messapparatur. Die zu testende Haftstruktur wird mit einer Positioniereinheit an ein Glassubstrat gedrückt. Das Knickverhalten der Haftstruktur wurde mit hochauflösendem Kamerasystem aus zwei Perspektiven beobachtet. Dabei kann die Bodenkamera die Kontaktfläche der Vorsprünge am Glassubstrat beobachten, während die Seitenkamera die Knickrichtung beobachtet.

Figur 17 zeigt schematische Querschnitte durch Vorsprünge 100 mit Stirnfläche 110, verbreiterter Basis 120 und Stützschicht 130, welche jeweils mindestens eine Materialalternierung aufweisen, wobei jeweils auf der linken Seite mehr Material vorhanden ist, als auf der rechten Seite. In 17 a) ist die Basis 120 kegelförmig geformt und verbreitert sich linear. Dabei ist der dadurch gebildete Sockel der Basis 120 auf der linken Seite breiter. In Darstellung 17 b) ist der Vorsprung sogar nur auf der einen Seite verbreitert, während die andere Seite nicht verbreitert ist. In Figur 17 c) sind beide Verbreiterungen der Basis 120 zunehmend ausgeführt. In Figur 17 d) ist der Vorsprung aus c) auf einer Stützschicht 130 angeordnet, welche wiederum auf einer Trägerschicht 140 angeordnet ist. Die Stützschicht weist eine seitliche Einkerbung 135 auf.

Über die bloße Knickrichtung hinaus wurden drei weitere wichtige Parameter gemessen. Es wurde untersucht, inwiefern die Geometrieänderungen in der Stützschicht bzw. an der Basis Auswirkungen auf die maximale Haftkraft $FH_{max}$, die maximale Kompressionskraft $FP_{max}$ und die Knick-Kompression $z_2$ haben. So kann untersucht werden, ob das maximale Haftvermögen der $FH_{max}$ der Mikrostruktur nicht negativ beeinflusst wird. Die maximale Kompressionskraft $FP_{max}$ und die Knick-Kompression $z_2$ sind nur Begleitparameter, welche keine übergeordnete Bedeutung haben. Für die Kraftmessungen wurden feine Kraftsensoren verwendet.

Tabelle 1 zeigt die gemessenen Werte der Strukturen. Es zeigt sich, dass das maximale Haftvermögen durch die Modifikation nicht verringert wird, da die Kontaktfläche gleichbleibt. Allerdings kann die Knickrichtung durch die Materialverteilung an der Basis der Vorsprünge individuell gesteuert werden.

Tabelle 1

| Design | Merkmal | Knickrichtung | $Z_2$ [μm] | $FH_{max}$ [mN] | $FP_{max}$ [mN] |
|---|---|---|---|---|---|
| 3C40.40-K120-F1 | Referenz | global | 25 | 1,3 | 1,0 |
| 3C40.40-K120-F-BLA1 | Säulen BL-Rand | außen | 27 | 1,4 | 1,0 |
| 3C40.40-K120-F-BLB1 | BL-Kerbung | außen | 27 | 1,4 | 1,0 |
| 3C40.40-K120-F-BLC1 | Erhöhung Mitte | außen (asym.) | 27 | 1,5 | 1,5 |
| 3C40.40-K120-F-BLD1 | Erhöhung Rand | global (asym.) | 24 | 1,5 | 1,3 |
| 3C40.40-K120-F2 | hoher Außenrad. | innen | 21 | 1,5 | 1,3 |
| 3C40.40-K120-F3 | hoher Innenrad. | außen | 27 | 1,4 | 1,5 |

**Patentansprüche**

1. Formkörper mit einer strukturierten Oberfläche, welche eine Strukturierung aufweist, die eine Vielzahl von Vorsprüngen umfasst, die mindestens jeweils einen Stamm aufweisen und eine von der Oberfläche wegweisende Stirnfläche, sowie eine Basis umfassen, und auf einer Stützschicht angeordnet sind, **dadurch gekennzeichnet, dass** bei mindestens einem Vorsprung die Basis und/oder die Stützschicht bezogen auf den Stamm eine Materialalternierung aufweisen, so dass es bei Belastung dieses Vorsprungs zu einer gerichteten Verformung unter Veränderung der Adhäsion kommt.

2. Formkörper nach Anspruch 1, **dadurch gekennzeichnet, dass** ausgehend vom Mittelpunkt der Grundfläche, die zu der Grundfläche des Vorsprungs senkrechte Verteilung an Material oberhalb der Grundfläche und/oder unterhalb der Grundfläche, d.h. innerhalb der Stützschicht, entlang eines zunehmenden Radius parallel zur Grundfläche unterschiedlich zum Radius in die entgegengesetzte Richtung ist.

3. Formkörper nach Anspruch 1 oder 2, **dadurch gekennzeichnet, dass** die eine Hälfte des Vorsprungs eine andere Materialverteilung aufweist als die andere Hälfte.

4. Formkörper nach einem der Ansprüche 1 bis 3, **dadurch gekennzeichnet, dass** der Vorsprung eine verbreiterte Basis aufweist und/oder die Stützschicht eine Einkerbung aufweist.

5. Formkörper nach einem der Ansprüche 1 bis 4, **dadurch gekennzeichnet, dass** die Materialalternierung durch Anordnung des Vorsprungs am Rand der Stützschicht erreicht wird.

6. Formkörper nach einem der Ansprüche 1 bis 5, **dadurch gekennzeichnet, dass** die Materialalternierungen an den einzelnen Vorsprüngen so angeordnet sind, dass die lateralen Kräfte der Verformung sich gegenseitig aufheben.

7. Verwendung eines Formkörpers nach einem der Ansprüche 1 bis 6 zur gesteuerten Adhäsion.

Fig. 1

a)

b)

Fig. 2

Fig. 3

a)

b)

Fig. 4

a)

b)

Fig. 6

Fig. 7

a)

b)

Fig. 8

Fig. 9

a)

b)

Fig. 10

Fig. 11

a)

b)

Fig. 12

Fig. 13

a)

b)

Fig. 14

Fig. 15

Fig. 16

a)

110

100

120

130

b)

110

100

120

130

c)

110

100

120

130

d)

110

100

120

130

135

140

Fig. 17

Europäisches Patentamt
European Patent Office
Office européen des brevets

# EUROPÄISCHER RECHERCHENBERICHT

**Nummer der Anmeldung**

EP 21 21 6847

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2020 109939 A1 (LEIBNIZ INSTITUT FUER NEUE MAT GEMEINNUETZIGE GESELLSCHAFT MIT BESCHRA) 14. Oktober 2021 (2021-10-14) * Absätze [0001], [0005], [0007]; Abbildungen * ----- | 1-7 | INV. C09J7/00 |
| X | DE 10 2015 103965 A1 (LEIBNIZ-INSTITUT FÜR NEUE MAT GEMEINNÜTZIGE GMBH [DE]) 22. September 2016 (2016-09-22) * Absätze [0001], [0008] – [0011], [0079]; Abbildungen * ----- | 1,3,7 | |
| X | US 2014/010988 A1 (SITTI METIN [US] ET AL) 9. Januar 2014 (2014-01-09) * Absätze [0002], [0011] – [0019], [0088]; Abbildungen * ----- | 1-4,6,7 | |
| X | US 2020/316788 A1 (DADKHAH TEHRANI MOHAMMAD [US] ET AL) 8. Oktober 2020 (2020-10-08) * Absätze [0004], [0059] – [0065]; Abbildungen * ----- | 1-4,7 | |
| X | EP 3 904 959 A1 (SHINETSU CHEMICAL CO [JP]) 3. November 2021 (2021-11-03) * Absätze [0012], [0017], [0018], [0072] – [0081]; Abbildungen * ----- | 1,3,7 | **RECHERCHIERTE SACHGEBIETE (IPC)** C09J C08J |

Der vorliegende Recherchenbericht wurde für alle Patentansprüche erstellt

| Recherchenort | Abschlußdatum der Recherche | Prüfer |
|---|---|---|
| München | 15. Juni 2022 | Kahl, Philipp |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 21 21 6847

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-06-2022

| Im Recherchenbericht angeführtes Patentdokument | Datum der Veröffentlichung | Mitglied(er) der Patentfamilie | Datum der Veröffentlichung |
|---|---|---|---|
| DE 102020109939 A1 | 14-10-2021 | DE 102020109939 A1 | 14-10-2021 |
| | | WO 2021204840 A1 | 14-10-2021 |
| DE 102015103965 A1 | 22-09-2016 | CN 107532045 A | 02-01-2018 |
| | | DE 102015103965 A1 | 22-09-2016 |
| | | DK 3271435 T3 | 13-09-2021 |
| | | EP 3271435 A1 | 24-01-2018 |
| | | ES 2886565 T3 | 20-12-2021 |
| | | JP 6951249 B2 | 20-10-2021 |
| | | JP 2018510794 A | 19-04-2018 |
| | | KR 20170129168 A | 24-11-2017 |
| | | US 2018051187 A1 | 22-02-2018 |
| | | WO 2016146792 A1 | 22-09-2016 |
| US 2014010988 A1 | 09-01-2014 | US 2010136281 A1 | 03-06-2010 |
| | | US 2014004291 A1 | 02-01-2014 |
| | | US 2014010988 A1 | 09-01-2014 |
| | | US 2014065347 A1 | 06-03-2014 |
| | | WO 2008076391 A2 | 26-06-2008 |
| US 2020316788 A1 | 08-10-2020 | CA 3056651 A1 | 20-09-2018 |
| | | EP 3595897 A1 | 22-01-2020 |
| | | JP 2020514053 A | 21-05-2020 |
| | | US 2018264657 A1 | 20-09-2018 |
| | | US 2019118388 A1 | 25-04-2019 |
| | | US 2019337162 A1 | 07-11-2019 |
| | | US 2020316788 A1 | 08-10-2020 |
| | | WO 2018170471 A1 | 20-09-2018 |
| EP 3904959 A1 | 03-11-2021 | CN 113552771 A | 26-10-2021 |
| | | EP 3904959 A1 | 03-11-2021 |
| | | JP 2021171695 A | 01-11-2021 |
| | | KR 20210131877 A | 03-11-2021 |
| | | US 2021335649 A1 | 28-10-2021 |

EPO FORM P0461

Für nähere Einzelheiten zu diesem Anhang : siehe Amtsblatt des Europäischen Patentamts, Nr.12/82